# EUROPÄISCHE PATENTSCHRIFT

(11) **EP 4 662 493 B1**
(45) Veröffentlichungstag und Bekanntmachung des Hinweises auf die Patenterteilung: **14.10.2026**
(21) Anmeldenummer: 23828368.3
(22) Anmeldetag: 11.12.2023
(51) Int. Cl.: G01P 3/44, G01P 3/48, G01B 7/14, G01H 1/00, G01S 13/88, G01B 15/00, G01H 9/00, G01S 13/58

(54) **VERFAHREN ZUR MESSUNG DER DREHZAHL EINER ELEKTRISCHEN MASCHINE**
METHOD FOR MEASURING THE ROTATIONAL SPEED OF AN ELECTRIC MACHINE
PROCÉDÉ DE MESURE DE VITESSE DE ROTATION DE MACHINE ÉLECTRIQUE

(30) Priorität: 07.02.2023 DE 102023102887
(43) Veröffentlichungstag der Anmeldung: 17.12.2025
(73) Patentinhaber: Voith Patent GmbH, 89522 Heidenheim (DE)
(72) Erfinder: JUNG, Alexander, 73547 Lorch (DE); SCHWARZ, Babette, 89428 Syrgenstein (DE); KÖDDING, Ludger, 89518 Heidenheim (DE)
(74) Vertreter: Voith Patent GmbH - Patentabteilung
(86) Internationale Anmeldenummer: PCT/EP2023/085077
(87) Internationale Veröffentlichungsnummer: WO 2024/165212

(56) Entgegenhaltungen:
- DE-A1- 102010 009 663
- US-A1- 2013 044 020
- US-A1- 2015 159 632
- US-A1- 2019 020 244

## Beschreibung

Die Erfindung betrifft ein Verfahren zur Messung der Drehzahl einer elektrischen Maschine. Bei der elektrischen Maschine handelt es sich bevorzugt, aber nicht ausschließlich um eine große elektrische Maschine wie sie beispielsweise in Wasserkraftanlangen zum Einsatz kommt.

Verfahren zur Messung der Drehzahl einer elektrischen Maschine sind aus dem Stand der Technik bekannt. Dabei werden in vielen Fällen Zahnscheiben mit einem Sensor abgetastet (vgl. beispielsweise die US 11,486,251 B2). Als Sensoren sind induktiv arbeitende Sensoren und Hallsensoren bekannt (vgl. beispielsweise die DE 10 2004 046 824 A1). Außerdem ist auch die Verwendung von optischen Sensoren bekannt.

Die DE 10 2010 009 663 A1 offenbart ein Verfahren zur Messung der Drehzahl einer elektrischen Maschine mit Hilfe eines Radarsystems. Außerdem können mit dem offenbarten Verfahren die Luftspaltweite und Schwingungen der Arbeitsspindel detektiert werden. Die US 5 760 731 A offenbart ein weiteres Verfahren zur Messung der Drehzahl einer elektrischen Maschine mit Hilfe eines Radarsystems, wobei zusätzlich Vibrationen des Rotors erfasst werden können. Die US 2019 / 0 020 244 A1 offenbart ein Verfahren zur Überwachung des Luftspaltes mit Hilfe eines Radarsystems. Die DE 10 2018 123 845 A1 offenbart ein Verfahren zur Überwachung des Wickelkopfes des Rotors einer elektrischen Maschine mit Hilfe eines Radarsystems, wobei das Radarsystem eine Verformung des Wickelkopfes detektieren kann. Die DE 10 2014 215 008 A1 offenbart ein Verfahren zur Bestimmung eines Anstellwinkels von Rotorblättern einer Turbine mit Hilfe eines Radarsystems.

Die Aufgabe der Erfindung ist es, ein alternatives Verfahren anzugeben, welches es als zusätzlichen Vorteil ermöglicht, neben der Drehzahl und der Weite des Luftspaltes auch eine weitere Kenngröße der elektrischen Maschine zu erfassen.

Die Aufgabe wird erfindungsgemäß durch eine Ausführung entsprechend dem unabhängigen Anspruch gelöst. Weitere vorteilhafte Ausführungsformen der vorliegenden Erfindung finden sich in den Unteransprüchen.

Erfindungsgemäß wird die Aufgabe durch die Verwendung eines speziell ausgebildeten Radarsystems gelöst.

Im Folgenden wird die Erfindung anhand von Figuren erläutert. Die Figuren zeigen im Einzelnen:
- Fig.1: Radarsystem;
- Fig.2: Elektrische Maschine in einer nicht beanspruchten Ausführungsform;
- Fig.3: Elektrische Maschine in einer weiteren nicht beanspruchten Ausführungsform;
- Fig.4: Elektrische Maschine in einer weiteren nicht beanspruchten Ausführungsform;
- Fig.5: Elektrische Maschine in einer weiteren nicht beanspruchten Ausführungsform;
- Fig.6: Erfindungsgemäße elektrische Maschine;
- Fig.7: Elektrische Maschine in einer weiteren nicht beanspruchten Ausführungsform;
- Fig.8: Elektrische Maschine in einer weiteren nicht beanspruchten Ausführungsform;

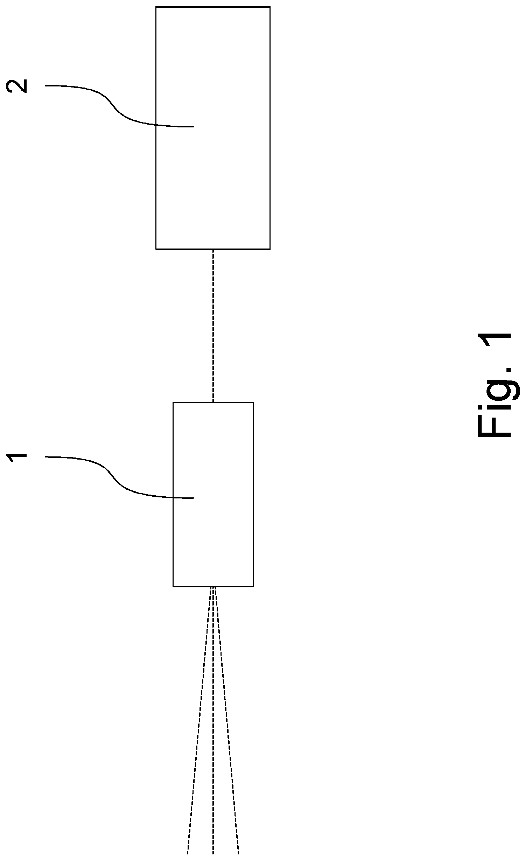

Figur 1 zeigt in stark schematischer Darstellung ein Radarsystem zur Verwendung im erfindungsgemäßen Verfahren. Das Radarsystem ist mit 1 bezeichnet. Ein Radarsystem umfasst üblicherweise einen Transceiver mit einer Sende- und einer Empfangsantenne und eine Steuereinrichtung. Dabei kann die Sende- und die Empfangsantenne separat als zwei einzelne Antennen oder integral als eine Antenne ausgeführt sein, die sowohl die Sende- als auch die Empfangsfunktion ausführen kann. Die Steuereinrichtung umfasst üblicherweise einen Mikroprozessor, der den Transceiver steuert und das Empfangssignal verarbeitet. Das Radarsystem 1 kann beispielsweise als CW oder als FMCW-Radarsystem ausgebildet sein. In jedem Fall ist das Radarsystem 1 so ausgebildet, dass es in zeitlicher Abhängigkeit einen Messwert bereitstellen kann, welcher einen Abstand repräsentiert. Dabei kann es sich um einen Abstand zwischen dem Radarsystem 1 und einem vom Radarsystem 1 erfassten Gegenstand handeln oder um einen Abstand zwischen zwei vom Radarsystem 1 erfassten Gegenständen (d.h. um eine Abstandsdifferenz). Die gestrichelten Linien in Figur 1 deuten den Strahlungskegel des Radarsystems 1 an, d.h. die Abstrahlcharakteristik der Sendeantenne. Das Radarsystem 1 ist mit einer Datenverarbeitungseinrichtung verbunden, welche mit 2 bezeichnet ist. Die Verbindung kann kabelgebunden oder kabellos erfolgen. In den folgenden Figuren wird auf die Darstellung der Datenverarbeitungseinrichtung 2 verzichtet.

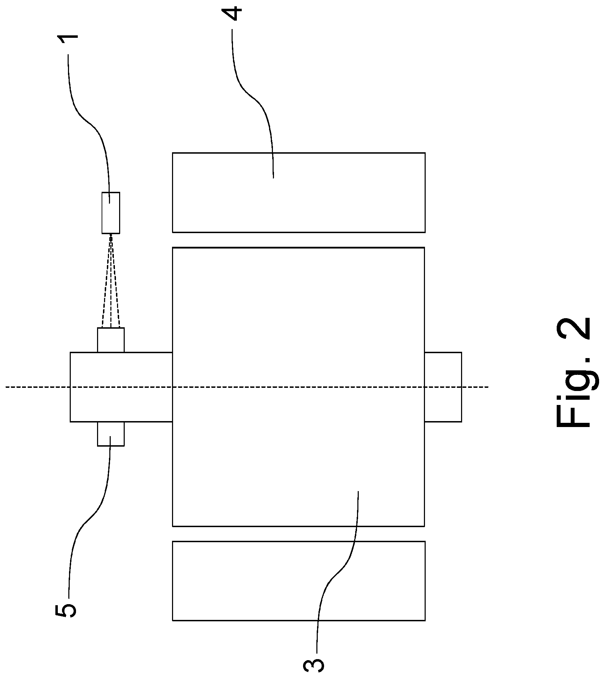

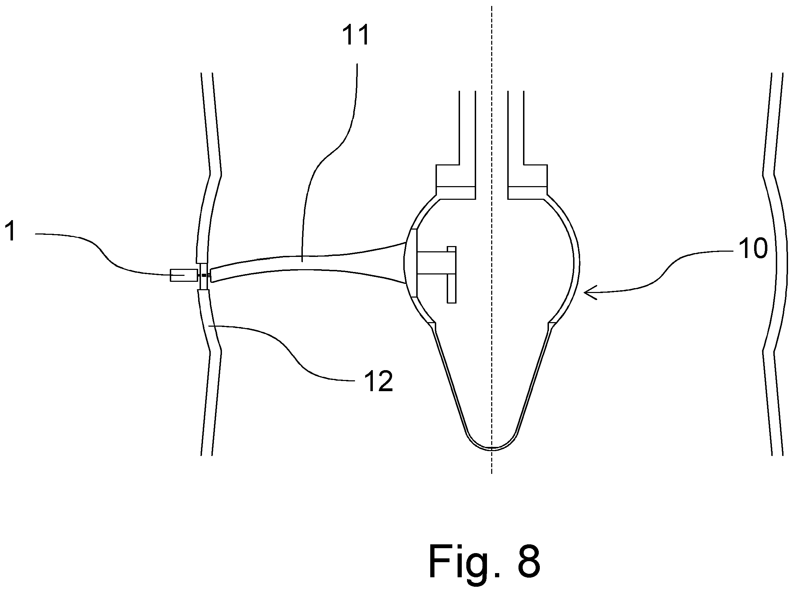

Figur 2 zeigt eine für die Durchführung eines nicht beanspruchten Verfahrens geeignete elektrische Maschine. Die elektrische Maschine umfasst einen Stator, welcher mit 4 bezeichnet ist, und einen Rotor, welcher mit 3 bezeichnet ist. Die gestrichelte Linie deutet dabei die Drehachse des Rotors 3 an. Im Rahmen dieses Dokumentes wird der Begriff "Rotor" sehr weit verwendet. Neben dem im üblichen Sprachgebrauch gängigen "eigentlichen Rotor" gehören gemäß dem Verständnis dieses Dokumentes alle mit dem "eigentlichen Rotor" verbundenen Gegenstände zum Rotor, d.h. alle Gegenstände, welche mit dem "eigentlichen Rotor" mitrotieren. Dabei kann es sich um Gegenstände handeln, welche gemäß dem üblichen Sprachgebrauch nicht zur elektrischen Maschine gehören. Demgemäß gehört gemäß dem Verständnis des vorliegenden Dokumentes z.B. bei einem elektrisch betriebenen Modellflugzeug der Propeller zum Rotor der elektrischen Maschine oder bei einem Wasserkraftwerk das Laufrad der hydraulischen Maschine zum Rotor der elektrischen Maschine (vgl. Figur 8). Die Verbindung der betreffenden Gegenstände mit dem "eigentlichen Rotor" kann dabei direkt sein, so dass die Gegenstände mit derselben Drehzahl rotieren, wie der "eigentliche Rotor", oder indirekt über ein Getriebe, so dass sich die Drehzahlen unterscheiden. Im zweiten Fall gibt es jedenfalls einen bekannten Zusammenhang der unterschiedlichen Drehzahlen, so dass sich die eine Drehzahl durch eine Multiplikation mit einer bekannten Konstanten aus der anderen ergibt.

Bei der elektrischen Maschine in Figur 2 umfasst der Rotor 3 eine Welle und eine mit der Welle verbundene Zahnscheibe, welche mit 5 bezeichnet ist. Außerdem umfasst die elektrische Maschine ein Radarsystem, welche mit 1 bezeichnet ist. Grundsätzlich ist das Radarsystem 1 so angeordnet, dass es einen Teil des Rotors 3 erfassen kann. In Figur 2 ist der vom Radarsystem 1 erfasste Teil des Rotors 3 die Zahnscheibe 5. Die Zahnscheibe 5 umfasst dabei Vorsprünge, welche verursachen, dass das Radarsystem 1 zeitlich variierende periodische Abstandswerte an die Datenverarbeitungseinrichtung 2 übermitteln kann, wenn der Rotor 3 rotiert. Wenn sich ein Zahn der Zahnscheibe 5 direkt vor dem Radarsystem befindet, dann detektiert dieses einen kleineren Abstand, als wenn sich kein Zahn direkt vor dem Radarsystem befindet. Die Anzahl der Zähne der Zahnscheibe und die Drehzahl des Rotors bestimmen die Frequenz, mit der sich lange und kurze Abstände abwechseln. Da die Anzahl der Zähne der Zahnscheibe bekannt ist, kann aus den detektierten Abstandswerten die Drehzahl des Rotors berechnet werden.

Das Verfahren umfasst die folgenden Schritte:
- S1: Während der Rotor 3 rotiert, detektiert das Radarsystem 1 zeitlich variierende periodische Abstandswerte und übermittelt dieselben an die Datenverarbeitungseinrichtung 2;
- S2: Berechnung der Drehzahl des Rotors 3 aus den übermittelten Abstandswerten durch die Datenverarbeitungseinrichtung 2.

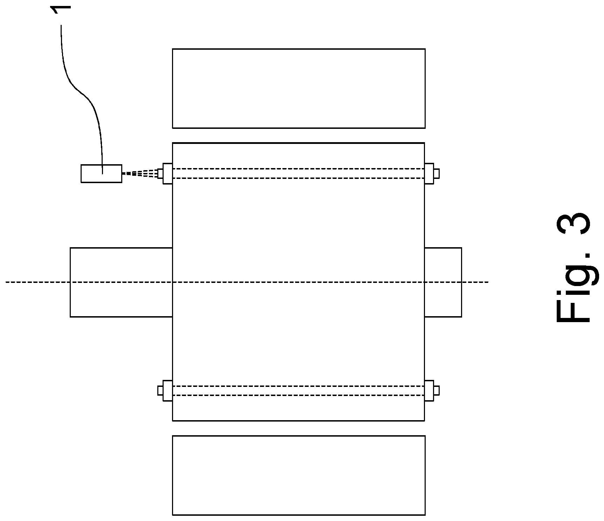

Die Erfinder haben erkannt, dass die Rotoren von vielen elektrische Maschinen so aufgebaut sind, dass auf eine Zahnscheibe für die Drehzahlmessung verzichtet werden kann. Dies wird beispielhaft durch die Ausführungsform von Figur 3 verdeutlicht. Viele Rotoren umfassen ein Blechpaket, welches durch Spannbolzen zusammengehalten wird. Die Enden der Spannbolzen ragen über das Blechpaket hinaus. Sie sind meist gleichmäßig um die Drehachse herum angeordnet. Wenn das Radarsystem, wie in Figur 3 gezeigt angeordnet wird, dann kann es die Spannbolzenenden erfassen, welche bei einer Rotation des Rotors periodisch vor dem Radarsystem erscheinen und wieder verschwinden. Es ergibt sich eine Abfolge von Abstandswerten analog zu der mit einer Zahnscheibe detektierten Abfolge von Abstandswerten. Je nach Ausbildung der jeweiligen elektrischen Maschine können für die Drehzahlmessung andere Rotorbereiche verwendet werden. Weitere Beispiele hierfür werden im Zusammenhang mit den übrigen Figuren des vorliegenden Dokumentes erläutert.

Zunächst soll jedoch auf einen weiteren Aspekt der vorliegenden Erfindung eingegangen werden. Die Erfinder haben erkannt, dass mit Hilfe der erfindungsgemäßen Anordnung weitere wichtige Kenngrößen der elektrischen Maschine bestimmt und überwacht werden können, ohne dass dazu weitere Einrichtungen benötigt werden. Eine mögliche weitere Kenngröße stellen Vibrationen dar. Eine Vibrationsüberwachung ermöglicht das rechtzeitige Erkennen von Fehlfunktionen und die Vermeidung von damit verbundenen Schäden an der elektrischen Maschine. Die Erfinder haben erkannt, dass mit Hilfe des Radarsystems simultan sowohl die Abstände detektiert werden können, die für die Drehzahlmessung benötigt werden, als auch die Abstandsvariationen detektiert werden können, die Aufschluss über Vibrationen der elektrischen Maschine geben. Zur Vibrationsmessung muss dabei ggf. lediglich die Abtastrate entsprechend erhöht werden. Die so ermittelten Vibrationskennzahlen beziehen sich zunächst auf den vom Radarsystem erfassten Teil des Rotors. Da sich Vibrationen unabhängig von der Ursache derselben über den ganzen Rotor ausbreiten, sind die so ermittelten Vibrationskennzahlen in jedem Fall ein Maß für die Laufruhe der elektrischen Maschine. D.h. eine Vibrationsmessung kann erfindungsgemäß immer (d.h. bei jeder denkbaren Anordnung des Radarsystems) mit der Drehzahlmessung kombiniert werden.

Das erfindungsgemäße Verfahren umfasst also optional zusätzlich den folgenden Schritt:
- S3: Berechnung von wenigstens einer weiteren Kennzahl des Rotors 3 aus den übermittelten Abstandswerten durch die Datenverarbeitungseinrichtung 2;
wobei die wenigstens eine weitere Kennzahl eine Vibrationskennzahl ist.

Die Erfinder haben erkannt, dass es neben den Vibrationskennzahlen auch noch weitere Kennzahlen gibt, welche simultan zur Drehzahlermittlung bestimmt werden können. Welche weiteren Kennzahlen bestimmt werden können, hängt dabei von der Ausbildung der elektrischen Maschine und der Anordnung des Radarsystems ab. In den folgenden Figuren werden beispielhaft einige der denkbaren Anordnungen und den damit verbundenen zu bestimmenden Kennzahlen aufgezeigt.

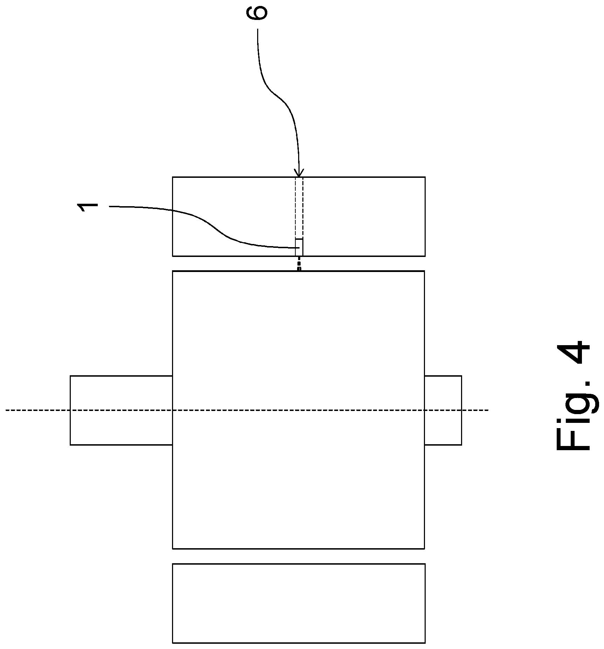

Figur 4 zeigt eine nicht beanspruchte elektrische Maschine, welche eine Vielzahl von Lüftungsschlitzen umfasst, welche im Stator angeordnet sind. Es ist nur einer der Lüftungsschlitze dargestellt und mit 6 bezeichnet. Das Radarsystem 1 ist so in dem dargestellten Lüftungsschlitz 6 angeordnet, dass es die Außenkontur eines Teiles des Rotors erfassen kann, welcher im Inneren des Stators angeordnet ist. Dabei durchdringen die vom Radarsystem 1 ausgehenden Strahlen den Luftspalt der elektrischen Maschine, welcher zwischen dem Stator und dem im Inneren des Stators angeordneten Teil des Rotors angeordnet ist, in radialer Richtung. Durch diese Anordnung kann aus den vom Radarsystem 1 detektierten Abstandswerten die Luftspaltweite ermittelt werden, wodurch eine Überwachung des Luftspaltes ermöglicht wird. Mit anderen Worten handelt es sich bei der zusätzlich berechneten Kennzahl des erfindungsgemäßen Verfahrens um die Luftspaltweite.

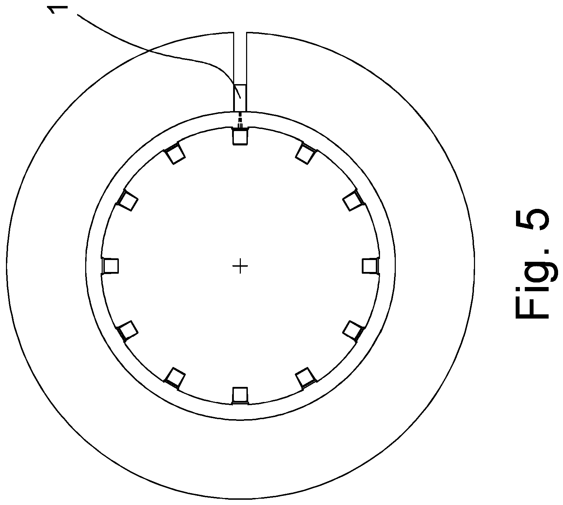

Figur 5 zeigt die Anordnung von Figur 4 in einem Schnitt senkrecht zur Drehachse der elektrischen Maschine. Anhand von Figur 5 soll erläutert werden, inwiefern mit der gezeigten Anordnung die Drehzahl der elektrischen Maschine bestimmt werden kann. Dies wird dadurch ermöglicht, dass bei sehr vielen elektrischen Maschinen die Außenkontur des im Inneren des Stators angeordneten Rotorteiles keineswegs einen perfekten Zylindermantel darstellt. Bei der dargestellten Maschine besteht die Rotorwicklung aus Leiterstäben, welche in Nuten des Rotorkörpers angeordnet sind. Die Leiterstäbe werden von Nutverschlusskeilen in den Nuten gehalten. Zwischen den Nuten befinden sich die sogenannten Zähne. Die Nutverschlusskeile sind gegenüber den Zähnen etwas nach Innen zurückversetzt. So ergibt sich eine Außenkontur, welche mit einer Zahnscheibe vergleichbar ist, und welche so eine Messung der Drehzahl mit der gezeigten Anordnung ermöglicht. Ähnliche Außenkonturen haben auch viele anders ausgebildete elektrische Maschinen, z.B. elektrische Maschinen mit Rotoren in Form eines Schenkelpolläufers. Das erfindungsgemäße Verfahren kann in der beschriebenen Weise immer dann eingesetzt werden, wenn die Außenkontur von der Zylindermantelform abweicht. Wenn dies nicht, wie bei den meisten elektrischen Maschinen ohnehin der Fall ist, dann kann dies selbstverständlich durch die Anbringung von kleinen Vorsprüngen oder der Eintiefung von kleinen Nuten erreicht werden.

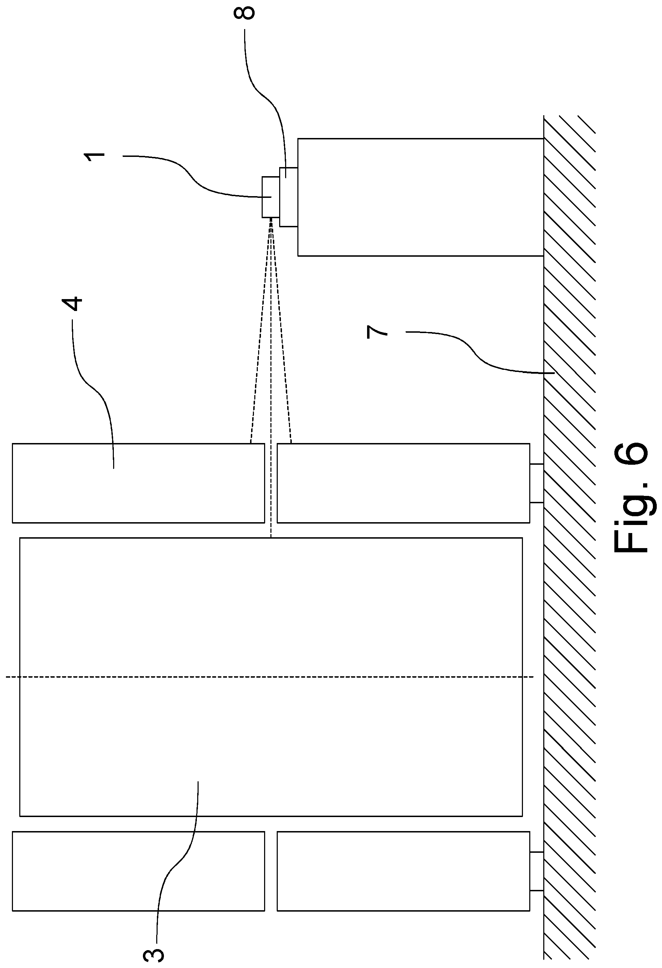

Figur 6 zeigt die erfindungsgemäße Anordnung, welche neben der Überwachung von Luftspalt und Vibrationen des Rotors auch eine Vibrationsüberwachung des Stators ermöglicht. Wie in den Figuren 4 und 5 durchdringen die Strahlen des Radarsystems 1 den Luftspalt in radialer Richtung. Im Unterschied zu den Figuren 4 und 5 ist das Radarsystem 1 außerhalb des Stators 4 angeordnet. Die Strahlen des Radarsystems 1 durchdringen dabei den Stator 4 durch eine geeignete Öffnung im Stator 4 und erfassen einen Teil des Rotors. Gleichzeitig erfasst das Radarsystem 1 einen Teil des Stators 4, was die Vibrationsüberwachung desselben ermöglicht. Dabei ist es von Vorteil, wenn das Radarsystem 1 in Bezug auf Schwingungen vom Stator 4 entkoppelt ist. Der Stator 4 und das Radarsystem sind mit einem Fundament verbunden, welches mit 7 bezeichnet ist. Zwischen Fundament 7 und Radarsystem 1 ist eine Schwingungsentkopplung angeordnet, welche mit 8 bezeichnet ist. Das erfindungsgemäße Verfahren umfasst die folgenden Schritte:
- S4: Detektion von zeitlich variierenden Abstandswerten zum erfassten Teil des Stators 4 durch das Radarsystem 1 und Übermittlung derselben an die Datenverarbeitungseinrichtung 2;
- S5: Berechnung einer Vibrationskennzahl für den Stator 4 aus den in S4 übermittelten Abstandswerten durch die Datenverarbeitungseinrichtung 2;

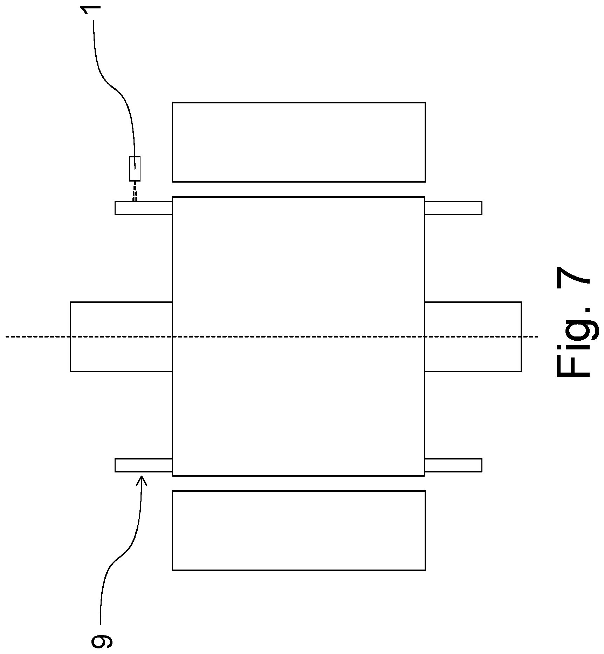

Figur 7 zeigt eine nicht beanspruchte-Anordnung, welche es ermöglicht, eine weitere Kenngröße der betreffenden elektrischen Maschine zu bestimmen. Die elektrische Maschine umfasst einen Wicklungskopf, welcher durch die in axialer Richtung über den Rotorkörper hinausragenden Wicklungsenden gebildet wird und mit 9 bezeichnet ist. Das Radarsystem 1 ist so angeordnet, dass es den Rotor im Bereich des Wicklungskopfes 9 erfassen kann. Die gezeigte Anordnung ermöglicht die Bestimmung und Überwachung der Deformation des Wicklungskopfes 9, welche durch die Einwirkung der Fliehkraft hervorgerufen wird. Es ist klar, dass der Aufbau des Wicklungskopfes 9 die simultane Messung der Drehzahl problemlos ermöglicht.

Wie bereits oben erwähnt umfasst gemäß dem Verständnis des vorliegenden Dokumentes der Rotor alle Gegenstände, die mit demselben verbunden sind und mit demselben mitrotieren. Bei einer Wasserkraftanlage ist dies z.B. das Laufrad der mit der elektrischen Maschine verbundenen hydraulischen Maschine. Figur 8 zeigt eine nicht beanspruchte Anordnung, welche ein solches Laufrad umfasst, welches mit 10 bezeichnet ist. Das Laufrad 10 rotiert in einem sogenannten Laufradring, welcher mit 12 bezeichnet ist. Das Laufrad 10 ist vom Typ Kaplan und umfasst eine Mehrzahl von schwenkbaren Laufschaufeln, von denen nur eine dargestellt und mit 11 bezeichnet ist. Das Radarsystem 1 ist so angeordnet, dass es durch ein Fenster im Laufradring 12 die radialen Enden der Laufschaufeln 11 erfassen kann, welche sich bei einer Rotation des Laufrades 10 am Fenster vorbeibewegen. Dabei durchdringen die Radarstrahlen den Spalt zwischen dem Fenster und den Laufradenden in radialer Richtung. Aus dem Gesagten ist klar, dass die gezeigte Anordnung die Überwachung der Spaltweite und die Überwachung der Vibration des Laufrades 10 ermöglicht. Auch die Messung der Drehzahl des Laufrades und damit der Drehzahl der elektrischen Maschine ist problemlos möglich, da das Radarsystem bei der Rotation des Laufrades 10 periodisch kleine und große Abstände detektiert. Kleine Abstände werden detektiert, wenn sich ein Laufschaufelende vor dem Fenster befindet. Große Abstände werden dann detektiert, wenn sich eine Lücke zwischen zwei benachbarten Laufschaufeln vor dem Fenster befindet. Außerdem ermöglicht die gezeigte Anordnung als weitere Kenngröße die Messung des Öffnungsgrades des Kaplan-Laufrades, da der Öffnungsgrad mit dem Tastverhältnis des periodischen Abstandssignals eindeutig zusammenhängt. Das Tastverhältnis ist das Verhältnis zwischen der zeitlichen Länge von kleinen Abstandswerten zu der zeitlichen Länge von großen Abstandswerten. Wenn die Laufschaufeln 11 so geschwenkt werden, dass der Öffnungsgrad des Laufrades den minimalen Wert annimmt, so sind die Lücken zwischen den Laufschaufeln minimal und daher das Tastverhältnis maximal. Beim maximalen Öffnungsgrad werden die Lücken maximal und daher das Tastverhältnis minimal. Das Tastverhältnis und der daraus berechnete Öffnungsgrad kann als Feedback für den Turbinenregler verwendet werden.

Das erfindungsgemäße Verfahren zur Messung der Drehzahl einer elektrischen Maschine kann leicht dahingehend modifiziert werden, dass es in der Lage ist, die azimutale Position des Rotors absolut zu bestimmen. Dazu muss nur dafür gesorgt werden, dass das von Radarsystem erfasste Abstandssignal bei einer vollen Umdrehung des Rotors einmalig einen bestimmten Abstand liefert. Dieses definierte einmalige Ereignis kann dann zur Positionskalibrierung verwendet werden. Ein solches einmaliges Ereignis kann beispielsweise durch die Anbringung eines zusätzlichen Vorsprungs oder einer zusätzlichen Nut an geeigneter Stelle im Bereich des Rotors, welcher vom Radarsystem erfasst wird, erzeugt werden. Soll außerdem noch die Drehrichtung bestimmt werden, dann kann dazu ein weiteres Radarsystem verwendet werden, das so wie das erste Radarsystem angeordnet wird, lediglich in azimutaler Richtung versetzt.

Die Erfindung wird durch die beiliegenden Ansprüche definiert.

### Bezugszeichenliste

- 1: Radarsystem
- 2: Datenverarbeitungseinrichtung
- 3: Rotor
- 4: Stator
- 5: Zahnscheibe
- 6: Lüftungsschlitz
- 7: Fundament
- 8: Schwingungsentkopplung
- 9: Wicklungskopf
- 10: Laufrad einer hydraulischen Maschine
- 11: Laufschaufel
- 12: Laufradring

## Patentansprüche

1. Verfahren zur Messung der Drehzahl einer elektrischen Maschine umfassend einen Rotor (3), einen Stator (4), wenigstens ein Radarsystem (1) und eine Datenverarbeitungseinrichtung (2), und wobei das wenigstens eine Radarsystem (1) so angeordnet ist, dass es einen Teil des Rotors (3) erfassen kann, und wobei die elektrische Maschine einen Luftspalt umfasst, welcher zwischen Rotor (3) und Stator (4) angeordnet ist, und wobei der vom wenigstens einem Radarsystem (1) erfasste Teil des Rotors (3) im Inneren des Stators (4) angeordnet ist, und wobei das wenigstens eine Radarsystem (1) so angeordnet ist, dass es wenigstens einen Teil des Stators (4) erfassen kann, und wobei das Verfahren die folgenden Schritte umfasst:
- S1: Während der Rotor (3) rotiert, detektiert das wenigstens eine Radarsystem (1) zeitlich variierende periodische Abstandswerte und übermittelt dieselben an die Datenverarbeitungseinrichtung (2);
- S2: Berechnung der Drehzahl des Rotors (3) aus den übermittelten Abstandswerten durch die Datenverarbeitungseinrichtung (2);
- S3: Berechnung von wenigstens einer weiteren Kennzahl des Rotors (3) aus den übermittelten Abstandswerten durch die Datenverarbeitungseinrichtung (2), und wobei die wenigstens eine weitere Kennzahl eine Weite des Luftspaltes umfasst;
- S4: Detektion von zeitlich variierenden Abstandswerten zum erfassten Teil des Stators (4) durch das wenigstens eine Radarsystem (1) und Übermittlung derselben an die Datenverarbeitungseinrichtung (2);
- S5: Berechnung einer Vibrationskennzahl für den Stator (4) aus den in S4 übermittelten Abstandswerten durch die Datenverarbeitungseinrichtung (2).

2. Verfahren zur Messung der Drehzahl einer elektrischen Maschine nach Anspruch 1, und wobei die wenigstens eine weitere Kennzahl des Rotors eine Vibrationskennzahl umfasst.

## Claims

1. A method for measuring the rotational speed of an electric machine comprising a rotor (3), a stator (4), at least one radar system (1) and a data processing device (2), wherein the at least one radar system (1) is arranged such that it can detect a portion of the rotor (3), and wherein the electric machine comprises an air gap which is arranged between the rotor (3) and the stator (4), and wherein the portion of the rotor (3) detected by the at least one radar system (1) is situated inside the stator (4), and wherein the at least one radar system (1) is arranged such that it can detect at least a portion of the stator (4), and wherein the method comprises the following steps:
- S1: Whilst the rotor (3) is rotating, the at least one radar system (1) detects time-varying periodic distance values and transmits them to the data processing device (2);
- S2: The data processing device (2) calculates the rotational speed of the rotor (3) from the transmitted distance values;
- S3: The data processing device (2) calculates at least one further parameter of the rotor (3) from the transmitted distance values, and wherein the at least one further parameter comprises a width of the air gap;
- S4: Detection by the at least one radar system (1) of time-varying distance values relative to the detected part of the stator (4) and transmission of these values to the data processing unit (2);
- S5: Calculation by the data processing device (2) of a vibration parameter for the stator (4) from the distance values transmitted in S4.

2. A method for measuring the rotational speed of an electric machine according to claim 1, wherein the at least one further parameter of the rotor comprises a vibration parameter.

## Revendications

1. Procédé de mesure de la vitesse de rotation d'une machine électrique comprenant un rotor (3), un stator (4), au moins un système radar (1) et un dispositif de traitement de données (2), dans lequel ledit au moins un système radar (1) est disposé de manière à pouvoir détecter une partie du rotor (3), et dans lequel la machine électrique comprend un entrefer qui est disposé entre le rotor (3) et le stator (4), la partie du rotor (3) détectée par ledit au moins un système radar (1) étant située à l'intérieur du stator (4), et ledit au moins un système radar (1) étant disposé de manière à pouvoir détecter au moins une partie du stator (4), le procédé comprenant les étapes suivantes :
- S1 : pendant que le rotor (3) tourne, ledit au moins un système radar (1) détecte des valeurs de distance périodiques variant dans le temps et les transmet au dispositif de traitement de données (2) ;
- S2 : calcul de la vitesse de rotation du rotor (3) à partir des valeurs de distance transmises par le dispositif de traitement de données (2) ;
- S3 : calcul, par le dispositif de traitement de données (2), d'au moins un autre paramètre caractéristique du rotor (3) à partir des valeurs de distance transmises, ledit au moins un autre paramètre caractéristique comprenant une largeur de l'entrefer ;
- S4 : détection, par le ou les systèmes radar (1), de valeurs de distance variant dans le temps par rapport à la partie détectée du stator (4), et transmission de celles-ci au dispositif de traitement des données (2) ;
- S5 : calcul, par le dispositif de traitement de données (2), d'un paramètre de vibration pour le stator (4) à partir des valeurs de distance transmises en S4.

2. Procédé de mesure de la vitesse de rotation d'une machine électrique selon la revendication 1, dans lequel le au moins un autre paramètre caractéristique du rotor comprend un paramètre caractéristique de vibration.
